# EUROPEAN PATENT SPECIFICATION

(11) **EP 3 483 903 B1**
(45) Date of publication and mention of the grant of the patent: **27.10.2021**
(21) Application number: 18199046.6
(22) Date of filing: 08.10.2018
(51) Int. Cl.: H01F 27/28

(54) **CAPACITIVE REACTANCE VOLTAGE TRANSFORMER**
SPANNUNGSWANDLER MIT KAPAZITIVER REAKTANZ
TRANSFORMATEUR DE TENSION À RÉACTANCE CAPACITIVE

(30) Priority: 19.10.2017 TW 106135831
(43) Date of publication of application: 15.05.2019
(73) Proprietor: AMTB Technology, 81364 Kaohsiung City (TW)
(72) Inventor: HUNG, Yu-Cheng, 81364 Kaohsiung City (TW)
(74) Representative: Roberts, David

(56) References cited:
- EP-A1- 2 156 447
- EP-A2- 1 976 104
- US-A- 6 054 914
- US-B1- 8 841 984

## Description

The invention relates to a voltage transformer, and more particularly to a capacitive reactance voltage transformer.

A conventional voltage transformer includes a ring-shaped magnetic core, and a primary coil and a secondary coil that are wrapped on the magnetic core. The ratio of voltage (or current) in the primary coil to that in the secondary coil is determined by the ratio between numbers of turns respectively of the primary and secondary coils. When the number of turns of the primary coil is more than that of the secondary coil, the voltage in the primary coil is greater than that in the secondary coil, and the current in the primary coil is smaller than that in the secondary coil. On the other hand, when the number of turns of the primary coil is less than that of the secondary coil, the voltage in the primary coil is smaller than that in the secondary coil, and the current in the primary coil is greater than that in the secondary coil. Due to existence of self inductance, the magnetic flux generated by the conventional voltage transformer does not complete interlink between the primary and secondary coils, resulting in leakage inductance. In this case, an inductive coupling coefficient between the primary and secondary coils is less than one.

In addition, to enhance high voltage withstanding capability, the conventional voltage transformer is often implemented with a large size magnetic core. However, the aforementioned approach is unsuitable when size reduction is a goal, and may increase power waste.

Therefore, an object of the invention is to provide a capacitive reactance voltage transformer that can alleviate at least one of the drawbacks of the prior art.

WO 2008/152616 A1 teaches a transformer which broadly includes a substrate having first and second surfaces; a first board mounted on the substrate first surface; a second board mounted on the substrate second surface; the boards being identical to one another and being mounted on the respective proximate substrate surfaces as mirror images of one another; each of the boards having a plurality of dielectric layers with electrically-conductive sheet windings embedded therein; and an assembled core operatively arranged to provide a path for magnetic flux attributable to a current in the windings.

EP 1 976 104 A2 teaches a transformer in which primary and secondary coils are provided in the first through section and a coil group is also provided in the second through section. Hence, the surface area over which the coil group extends within a plane which is perpendicular to the through sections is greater than in the case where all of the coils are provided in a single through section.

According to the invention, the capacitive reactance voltage transformer includes a magnetic core and a coil unit. The magnetic core is formed with an internal space, and has a leg portion for passage of at least one closed magnetic loop path. The coil unit is sleeved on the leg portion of the magnetic core, and includes a plurality of coil modules. The coil modules are sleeved on the leg portion of the magnetic core and are stacked together. Each of the coil modules includes an insulating baseboard that is formed with a through hole through which the leg portion of the magnetic core extends, and a first winding and a second winding that are disposed on the insulating baseboard and spaced apart from each other. The first winding surrounds the leg portion of the magnetic core in such a way as to substantially correspond to the second winding so as to cooperatively form a coupling capacitor. The first windings respectively of the coil modules are connected in parallel to cooperatively serve as one of a primary winding and a secondary winding. The second windings respectively of the coil modules are connected in series to cooperatively serve as the other one of the primary winding and the secondary winding. The capacitive reactance voltage transformer is characterised in that said coil unit further includes, for each pair of said coil modules that are stacked adjacent to each other, an insulating plate that is sleeved on said leg portion of said magnetic core and that is interposed between said coil modules; and for each of said coil modules, said insulating baseboard has a first surface and a second surface opposite to each other, said first winding and said second winding surrounding said through hole of said insulating baseboard respectively on said first surface and said second surface of said insulating baseboard in such a way as to substantially correspond to each other. Each of said coil modules further includes a first conductive pad and a second conductive pad that are respectively connected to opposite ends of said first winding, and a third conductive pad and a fourth conductive pad that are respectively connected to opposite ends of said second winding, said first to fourth conductive pads being misaligned with each other in a reference direction perpendicular to said first and second surfaces of said insulating baseboard. For said coil modules, said first conductive pads correspond to each other in position in the reference direction, and said second conductive pads correspond to each other in position in the reference direction. For i^{th} and i+1^{th} ones of said coil modules where i represents any positive integer smaller than or equal to a total number of said coil modules (3) minus one, said fourth conductive pad of the i^{th} one of said coil modules corresponds to said third conductive pad of the i+1^{th} one of said coil modules in position in the reference direction; each of said coil modules is formed with a first through hole extending through said first conductive pad and said insulating baseboard, a second through hole extending through said second conductive pad and said insulating baseboard, a third through hole extending through said third conductive pad and said insulating baseboard, and a fourth through hole extending through said fourth conductive pad and said insulating baseboard. For said coil modules, said first through holes correspond to each other in position in the reference direction, and said second through holes correspond to each other in position in the reference direction; for the i^{th} and i + 1^{th} ones of said coil modules, said fourth through hole of the i^{th} one of said coil modules corresponds to said third through hole of the i+1^{th}one of said coil modules in position in the reference direction; for the i^{th} and i + 1^{th} ones of said coil modules, said insulating plate that is interposed between the i^{th} and i + 1^{th} ones of said coil modules is further formed with a first plate through hole that corresponds to said first through holes of the i^{th} and i + 1^{th} ones of said coil modules in position in the reference direction, a second plate through hole that corresponds to said second through holes of the i^{th} and i+1^{th} ones of said coil modules in position in the reference direction, and a third plate through hole that corresponds to said fourth through hole of said the i^{th} one of said coil modules and said third through hole of the i+1^{th} one of said coil modules in position in the reference direction. Said capacitive reactance voltage transformer further comprises: a first conducting component that is electrically connected to said first conductive pads of said coil modules by extension through said first through holes of said coil modules and said first plate through hole of said insulating plate for the i^{th} and i + 1^{th} ones of said coil modules; a second conducting component that is electrically connected to said second conductive pads of said coil modules by extension through said second through holes and said second plate through hole of said insulating plate for the i^{th} and i+1^{th} ones of said coil modules; and for the i^{th} and i+1^{th} ones of said coil modules, a third conducting component that is electrically connected to said fourth conductive pad of the i^{th} one of said coil modules and said third conductive pad of the i + 1^{th} one of said coil modules by extension through said fourth through hole of the i^{th} one of said coil modules, said third through hole of the i + 1^{th} one of said coil modules, and said third plate through hole of said insulating plate which is interposed between the i^{th} and i + 1^{th} ones of said coil modules.

Other features and advantages of the invention will become apparent in the following detailed description of the embodiments with reference to the accompanying drawings, of which:
Figure 1 is a perspective view illustrating an embodiment of a capacitive reactance voltage transformer according to the invention;
Figure 2 is an exploded perspective view illustrating the embodiment of the capacitive reactance voltage transformer according to the invention;
Figure 3 is a sectional view illustrating a magnetic core of the embodiment of the capacitive reactance voltage transformer according to the invention
Figure 4 is a perspective view illustrating a coil unit of the embodiment of the capacitive reactance voltage transformer according to the invention;
Figure 5 is a top view illustrating a first type of coil modules of the coil unit of the embodiment of the capacitive reactance voltage transformer according to the invention;
Figure 6 is a bottom view illustrating the first type of the coil modules of the embodiment of the capacitive reactance voltage transformer according to the invention;
Figure 7 is a top view illustrating a second type of the coil modules of the coil unit of the embodiment of the capacitive reactance voltage transformer according to the invention;
Figure 8 is a bottom view illustrating the second type of the coil modules of the embodiment of the capacitive reactance voltage transformer according to the invention;
Figure 9 is a perspective view illustrating an insulating plate of the embodiment of the capacitive reactance voltage transformer according to the invention;
Figure 10 is a sectional view of the coil unit of the embodiment of the capacitive reactance voltage transformer taken along an imaginary plane passing through an imaginary line X-X' depicted in Figure 4;
Figure 11 is a circuit diagram illustrating an equivalent circuit model of the embodiment of the capacitive reactance voltage transformer according to the invention;
Figure 12 is a perspective view illustrating an example of a capacitive reactance voltage transformer not part of the invention as claimed;
Figure 13 is a top view illustrating a first type of coil modules of the example of a capacitive reactance voltage transformer not part of the invention as claimed;
Figure 14 is a top view illustrating a second type of the coil modules of the example of a second embodiment of the capacitive reactance voltage transformer not part of the invention as claimed;
Figure 15 is a circuit diagram illustrating an equivalent circuit model of the example of a capacitive reactance voltage transformer not part of the invention as claimed;
Figure 16 is a schematic diagram illustrating a result of computer simulation of the example of a capacitive reactance voltage transformer not part f the invention as claimed;
Figure 17 is a top view illustrating one of three stacked coil modules;
Figure 18 is a bottom view illustrating embodiments of three coil modules to be stacked together in order from top to bottom;
Figure 19 is a top view illustrating an insulating plate utilized in the stacked three coil modules; and
Figure 20 is a circuit diagram illustrating a sophisticated equivalent circuit model of the example of a capacitive reactance voltage transformer not part of the invention as claimed.

Before the disclosure is described in greater detail, it should be noted that where considered appropriate, reference numerals or terminal portions of reference numerals have been repeated among the figures to indicate corresponding or analogous elements, which may optionally have similar characteristics.

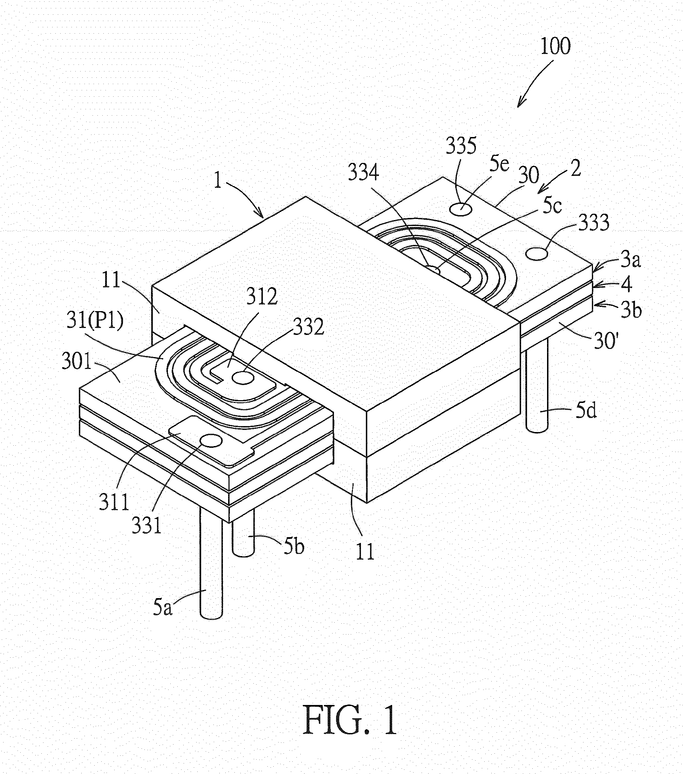

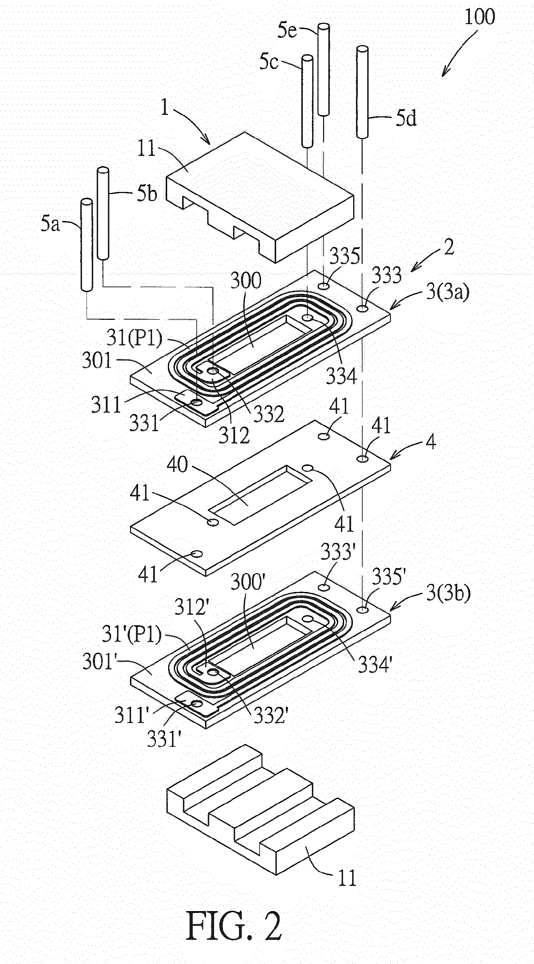

Referring to Figures 1 and 2, a first embodiment of a capacitive reactance voltage transformer 100 according to the invention is illustrated. The first embodiment of the capacitive reactance voltage transformer 100 includes a magnetic core 1 and a coil unit 2.

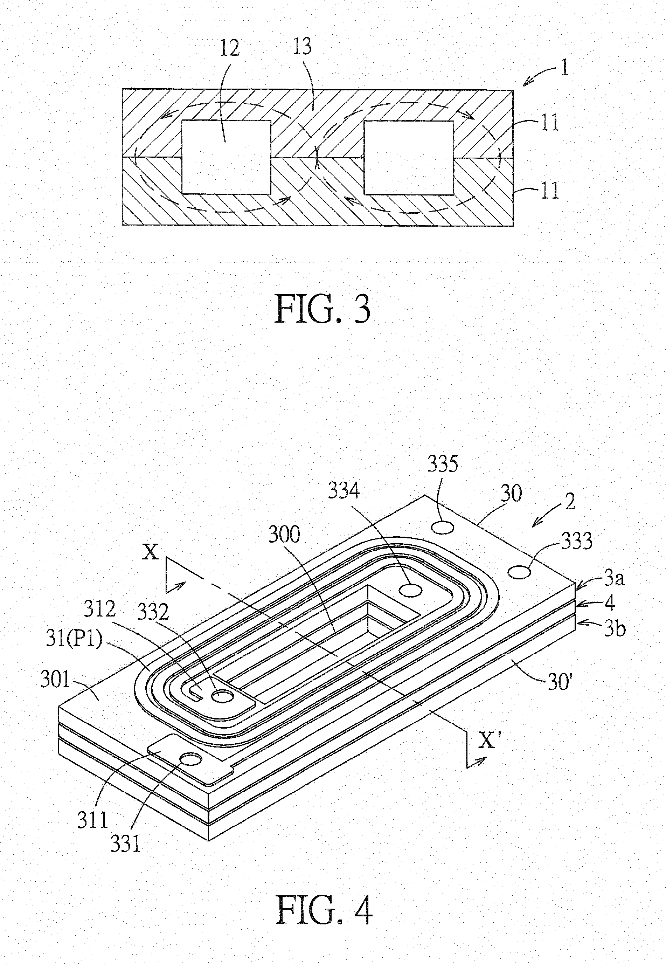

Further referring to Figure 3, the magnetic core 1 is formed with an internal space 12, and has a leg portion 13 for passage of at least one closed magnetic loop path. In this embodiment, the magnetic core 1 is implemented to be composed by two E-shaped core bodies 11, and the leg portion 13 thereof is provided for passage of two closed magnetic loop path, as shown by two dash arrow ovals. Specifically speaking, in this embodiment, the two E-shaped core bodies 11 cooperatively constitute an outer portion of the magnetic core 1 that defines the internal space 12, and the leg portion 13 of the magnetic core 1 that extends through the internal space 12 and connects opposite sides of the outer portion of the magnetic core 1 to divide the internal space 12 into two parts. It is noted that implementation of the magnetic core 1 is not limited to the disclosure herein and may vary in other embodiments. For example, in one embodiment, the magnetic core 1 may be implemented as an O-shaped core with a segment serving as the leg portion for passage of one closed magnetic loop path, wherein the O-shaped core is formed by a combination of two U-shaped cores.

The coil unit 2 is sleeved on the leg portion 13 of the magnetic core 1, and includes a plurality of coil modules 3 and at least one insulating plate 4. In this embodiment, the coil unit 2 includes a pair of coil modules 3a and 3b, and one insulating plate 4 that is disposed between the coil modules 3a and 3b, but implementation of the coil unit 2 is not limited to what is disclosed herein and may vary in other embodiments. In other embodiments, the coil unit 2 may include *N* number of the coil modules 3 and *N* - 1 number of the insulating plates 4, where *N* is a positive integer greater than two. The coil modules 3a and 3b are sleeved on the leg portion 13 of the magnetic core 1 and are stacked together. For each pair of the coil modules 3 that are stacked adjacent to each other, there is one insulating plate 4 sleeved on the leg portion 13 of the magnetic core 1 and interposed between the coil modules 3. In this embodiment, the insulating plate 4 is made of a plastic material (e.g., a Mylar plate), but implementation thereof is not limited to the disclosure herein and may vary in other embodiments.

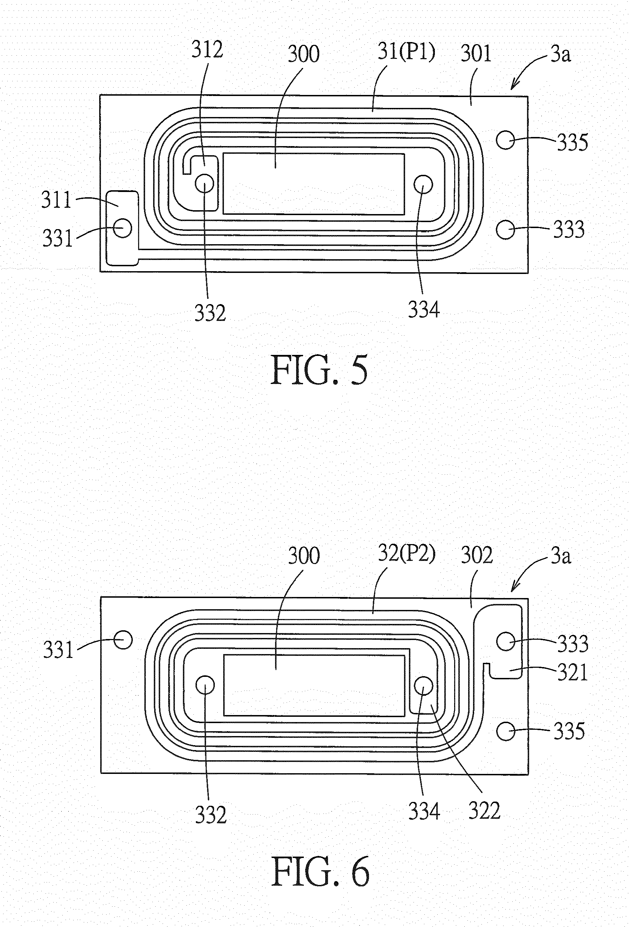

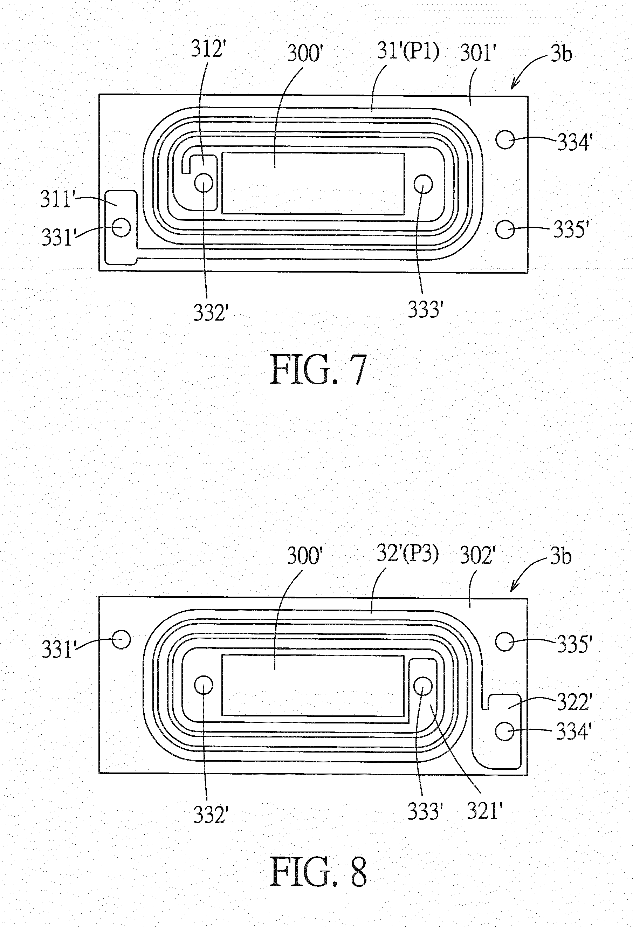

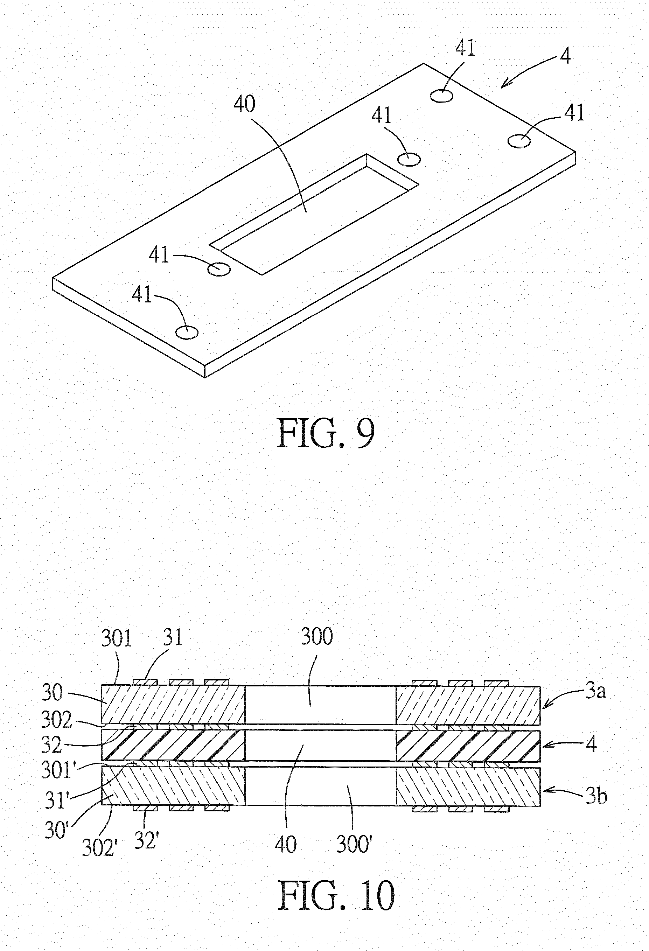

Referring to Figures 2, 4 and 10, each of the coil modules 3a and 3b includes an insulating baseboard 30 (30'), and a first winding 31 (31'), a second winding 32 (32'), a first conductive pad 311 (311'), a second conductive pad 312 (312'), a third conductive pad 321 (321') (see Figures 6 and 8) and a fourth conductive pad 322 (322') (see Figures 6 and 8) that are all formed on the insulating baseboard 30 (30'). For each of the coil modules 3a and 3b, the insulating baseboard 30 (30') has a first surface 301 (301') (e.g., a top surface in Figure 10) and a second surface 302 (302') (e.g., a bottom surface in Figure 10) opposite to each other. In this embodiment, the insulating baseboard 30 (30') of each of the coil modules 3a and 3b is made of a material that contains silicon dioxide, such as fiberglass, but implementation thereof is not limited to the disclosure herein and may vary in other embodiments. As shown in Figure 10, which is a sectional view of the coil unit 2 of the capacitive reactance voltage transformer 100 taken along an imaginary plane passing through an imaginary line (X-X') as plotted in Figure 4, the insulating baseboard 30 (30') is formed with a through hole 300 (300'), such that the leg portion 13 of the magnetic core 1 extends through the through hole 300 (300') when the magnetic core 1, the coil unit 2 and the insulating plate(s) 4 are assembled to form the capacitive reactance voltage transformer 100, as shown in Figure 1.

For the coil module 3a, as shown in Figures 5 and 6, the first winding 31 and the second winding 32 are respectively disposed on the first and second surfaces 301, 302 of the insulating baseboard 30 (see Figure 1) and are spaced apart from each other by the insulating baseboard 30. The first winding 31 surrounds the leg portion 13 of the magnetic core 1 in such a way as to substantially correspond to the second winding 32 so as to cooperatively form a coupling capacitor (not shown) . Specifically speaking, the coil module 3a is made to have the first winding 31 and the second winding 32 surrounding or spiraling around the through hole 300 of the insulating baseboard 30 respectively on the first surface 301 and the second surface 302 of the insulating baseboard 30 in such a way as to substantially correspond to each other so as to serve respectively as two conducting patterns (P1 and P2) . The first conductive pad 311 and the second conductive pad 312 are respectively connected to opposite ends of the first winding 31. In this embodiment, the first winding 31 surrounds the leg portion 13 of the magnetic core 1 from the first conductive pad 311 to the second conductive pad 312 in a first direction from a top view of the first surface 301 (e.g., a counterclockwise direction). The third conductive pad 321 and the fourth conductive pad 322 are respectively connected to opposite ends of the second winding 32. In this embodiment, the second winding 32 surrounds the leg portion 13 of the magnetic core 1 from the third conductive pad 321 to the fourth conductive pad 322 in a second direction from a top view of the second surface 302 (e.g., a clockwise direction), the second direction being opposite to the first direction. The first to fourth conductive pads 311, 312, 321 and 322 are misaligned with each other in a reference direction perpendicular to the first and second surfaces 301, 302 (i.e., a direction in which the coil modules 3 are stacked together), and expand in size from the corresponding ends of the corresponding first and second windings 31, 32, as shown in Figures 5 and 6, so as to form wider segments in comparison to the first and second windings 31, 32. The coil module 3a is formed with a first through hole 331 extending through the first conductive pad 311 and the insulating baseboard 30, a second through hole 332 extending through the second conductive pad 312 and the insulating baseboard 30, a third through hole 333 extending through the third conductive pad 321 and the insulating baseboard 30, and a fourth through hole 334 extending through the fourth conductive pad 322 and the insulating baseboard 30, and a fifth through hole 335 extending through merely the insulating baseboard 30 at an upper right corner of the first surface 301 (from the perspective of Figure 5) .

It should be noted that the total number of the through holes (i.e., the first to fifth through holes 331 to 335) formed in the coil unit 2 is not limited to the disclosure herein, and implementation of the number of the through holes may vary in other embodiments and be determined based on the total number of the coil modules 3 .

Similar to the coil module 3a, for the coil module 3b, as shown in Figures 7 and 8, the first winding 31' and the second winding 32' are respectively disposed on the first and second surfaces 301', 302' of the insulating baseboard 30' , and are spaced apart from each other by the insulating baseboard 30' . The first winding 31' surrounds the leg portion 13 of the magnetic core 1 in such a way as to substantially correspond to the second winding 32' so as to cooperatively form a coupling capacitor (not shown). Specifically speaking, the coil module 3b is made to have the first winding 31' and the second winding 32' surrounding or spiraling around the through hole 300' of the insulating baseboard 30' respectively on the first surface 301' and the second surface 302' of the insulating baseboard 30' in such a way as to substantially correspond to each other so as to serve respectively as two conducting patterns (P1 and P3). The first conductive pad 311' and the second conductive pad 312' are respectively connected to opposite ends of the first winding 31', and the third conductive pad 321' and the fourth conductive pad 322' are respectively connected to opposite ends of the second winding 32'. The first winding 31' surrounds the leg portion 13 of the magnetic core 1 from the first conductive pad 311' to the second conductive pad 312' in a direction the same as the direction in which the first winding 31 surrounds the leg portion 13 of the magnetic core 1 from the first conductive pad 311 to the second conductive pad 312, from a top view of the first surface 301'. The second winding 32' surrounds the leg portion 13 of the magnetic core 1 from the third conductive pad 321' to the fourth conductive pad 322' in a direction same as the direction in which the second winding 32 surrounds the leg portion 13 of the magnetic core 1 from the third conductive pad 321 to the fourth conductive pad 322, from a top view of the second surface 302' . The first to fourth conductive pads 311' , 312', 321' and 322' are misaligned with each other in the reference direction which is also perpendicular to the first and second surfaces 301' , 302' , and are expanded in size from the corresponding ends of the corresponding first and second windings 31' , 32', as shown in Figures 7 and 8, so as to form wider segments in comparison to the first and second windings 31' , 32' . The coil module 3b is formed with a first through hole 331' extending through the first conductive pad 311' and the insulating baseboard 30', a second through hole 332' extending through the second conductive pad 312' and the insulating baseboard 30', a third through hole 333' extending through the third conductive pad 321' and the insulating baseboard 30' , and a fourth through hole 334' extending through the fourth conductive pad 322' and the insulating baseboard 30' , and a fifth through hole 335' extending through merely the insulating baseboard 30' at a lower right corner of the first surface 301 (from the perspective of Figure 7).

It is worth to note that for the coil modules 3a and 3b, the first conductive pads 311 and 311' correspond to each other in position (e.g., overlapping or aligned with each other in an extension direction of the leg portion 13), the second conductive pads 312 and 312' correspond to each other in position, and the fourth conductive pad 322 of the coil module 3a corresponds to the third conductive pad 321' of the coil module 3b in position. In this embodiment, the third conductive pads 321 of the coil module 3a and the fourth conductive pad 322' do not correspond to each other in position (i.e., misaligned with each other or non-overlapping in the extension direction of the leg portion 13), but this disclosure is not limited in this respect. It should be noted that the extension direction of the leg portion 13 is the reference direction previously described.

It is worth to note that for the coil modules 3a and 3b, the first through holes 331 and 331' correspond to each other in position (e.g., overlapping or aligned with each other in the extension direction of the leg portion 13), the second through holes 332 and 332' correspond to each other in position, and the fourth through hole 334 of the coil module 3a corresponds to the third through hole 333' of the coil module 3b in position. In this embodiment, the third through hole 333 of the coil module 3a and the fifth through hole 335' of the coil module 3b correspond to each other in position, and the fifth through hole 335 of the coil module 3a and the fourth through hole 334' of the coil module 3b correspond to each other in position.

Referring to Figures 1, 2 and 9, for each pair of the coil modules 3a and 3b that are stacked adjacent to each other, the insulating plate 4 interposed therebetween is formed with a central through hole 40 for passage of the leg portion 13 of the magnetic core 1 (i.e., the leg portion 13 extends through the central through hole 40 when the magnetic core 1, the coil unit 2 and the insulating plate(s) 4 are assembled to form the capacitive reactance voltage transformer 100), and five plate through holes 41 that respectively correspond to the first to fifth through holes 331, 332, 333, 334, 335 or 331', 332' , 334' , 333' , 335' of each of the coil modules 3a and 3b in position. However, implementation of the number of the plate through holes 41 of the insulating plate 4 is not limited to the disclosure herein, and in other embodiments, may vary and may be determined based on the total number of the coil modules 3.

In this embodiment, the capacitive reactance voltage transformer 100 further includes a first conducting component, a second conducting component, a third conducting component, a fourth conducting component and a fifth conducting component in order to make desired electrical connections for the first windings 31, 31' and the second windings 32, 32' of the coil modules 3a, 3b. In this embodiment, the first to fifth conducting components are respectively implemented to be a first conductive pole (5a), a second conductive pole (5b), a third conductive pole (5c), a fourth conductive pole (5d) and a fifth conductive pole (5e), but implementations of the first to fifth conducting components are not limited to the disclosure herein and may vary in other embodiments. For example, in a case that coil modules 3a, 3b are implemented to be a multiple-layered structure, or in a case that the insulating plate 4 is thin, the first to fifth conducting components may be implemented to be conductive material coated on inner walls of the first to fifth through holes 331-335, 331'-335' of the coil modules 3a, 3b.

Referring to Figure 2, the first conducting component, i.e., the first conductive pole (5a), is electrically connected to the first conductive pads 311 and 311' of the coil modules 3a and 3b by extension through the first through holes 331 and 331' of the coil modules 3a and 3b and a first one of the five plate through holes 41 of the insulating plate 4 that is aligned with the first through holes 331 and 331' in the extension direction of the leg portion 13. The second conducting component, i.e., the second conductive pole (5b), is electrically connected to the second conductive pads 312 and 312' of the coil modules 3a and 3b by extension through the second through holes 332 and 332' and a second one of the five plate through holes 41 of the insulating plate 4 that is aligned with the second through holes 332 and 332' in the extension direction of the leg portion 13. In this way, the first windings 31 and 31' respectively of the coil modules 3a and 3b are connected in parallel to cooperatively serve as one of a primary winding and a secondary winding of the capacitive reactance voltage transformer 100.

The third conducting component, i.e., the third conductive pole (5c), is electrically connected to the fourth conductive pad 322 and the third conductive pad 321' (see Figure 6 and Figure 8) respectively of the coil modules 3a and 3b by extension through the fourth through hole 334 and the third through hole 333' respectively of the coil modules 3a and 3b and a third one of the five plate through holes 41 of the insulating plate 4 that is aligned with the fourth through hole 334 and the third through hole 333' respectively of the coil modules 3a and 3b in the extension direction of the leg portion 13. In this way, the second windings 32 and 32' respectively of the coil modules 3a and 3b are connected in series to cooperatively serve as the other oneof the primary winding and the secondary winding of the capacitive reactance voltage transformer 100.

The fourth conducting component, i.e., the fourth conductive pole (5d), is electrically connected to the third conductive pad 321 (see Figure 6) of the coil module 3a by extension through the third through hole 333 of the coil module 3a.

The fifth conducting component, i.e., the fifth conductive pole (5e), is electrically connected to the fourth conductive pad 322' (see Figure 8) of the coil module 3b by extension through the fourth through hole 334' of the coil module 3b.

In this embodiment, the first windings 31 and 31' that are connected in parallel cooperatively serve as the primary winding, and the second windings 32 and 32' that are connected in series cooperatively serve as the secondary winding. In this way, the capacitive reactance voltage transformer 100 is a voltage converter with a voltage gain equal to two. In a case that the first windings 31 and 31' that are connected in parallel cooperatively serve as the secondary winding, and the second windings 32 and 32' that are connected in series cooperatively serve as the primary winding, the resultant capacitive reactance voltage transformer 100 is a voltage converter with a voltage gain equal to one half. It should be noted that implementation of wiring of the primary winding and the secondary winding is not limited to the disclosure herein and may vary in other embodiments.

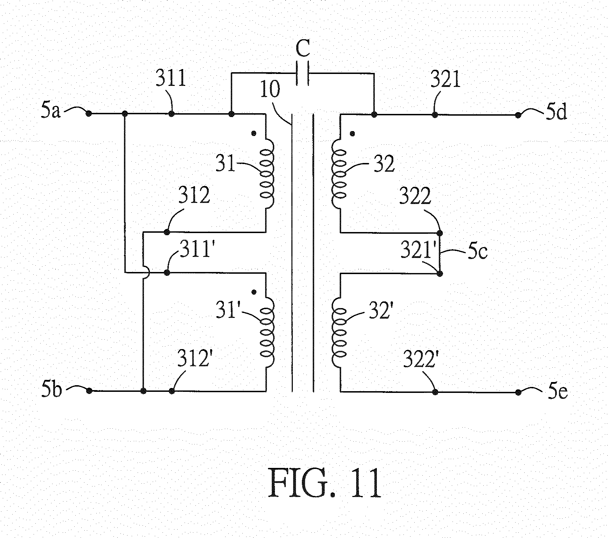

Figure 11 illustrates an equivalent circuit diagram of the capacitive reactance voltage transformer 100 which serves as the voltage converter with a voltage gain equal to two. An effective coupling capacitor (C) electrically connected between terminals of the primary winding and the secondary winding results from the coupling capacitor formed between the first winding 31 and the second winding 32 of the coil module 3a, and the coupling capacitor formed between the first winding 31' and the second winding 32' of the coil module 3b.

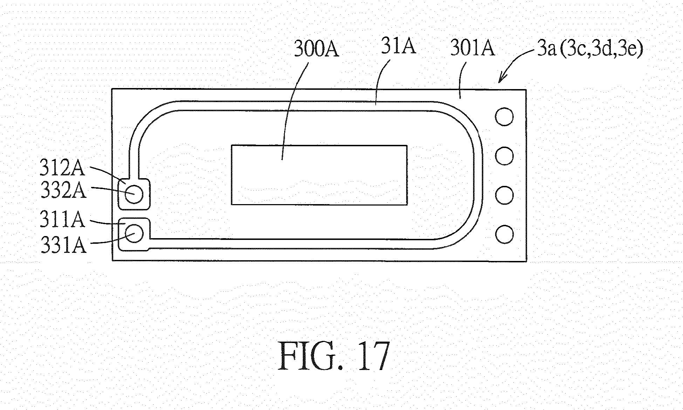

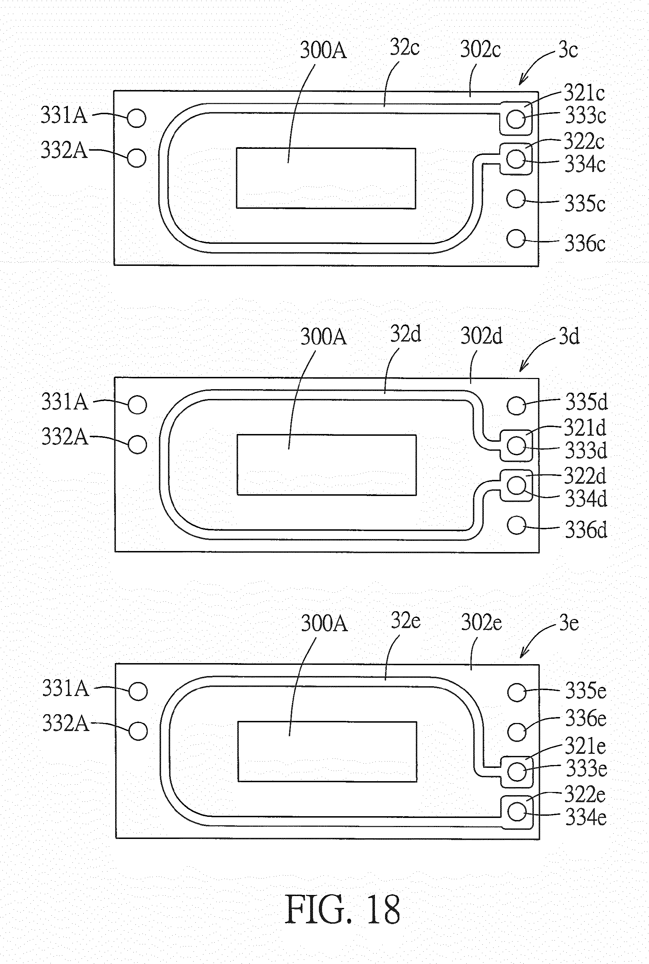

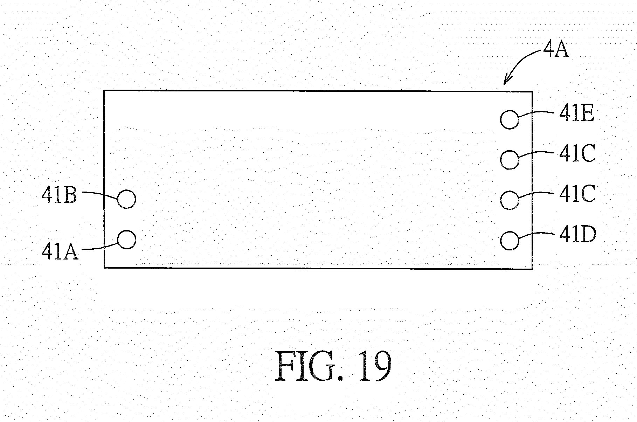

It is noted that the capacitive reactance voltage transformer according to this disclosure may include more than two coil modules 3. Referring to Figures 17 and 18, the capacitive reactance voltage transformer 100 (see Figure 1) is exemplified to include three coil modules 3c, 3d, 3e stacked together in order from top to bottom. In this example, the coil modules 3c, 3d, 3e serve as the first one, second one and third one of the coil modules 3 of the capacitive reactance voltage transformer, respectively, and have, but not limited to, the same configuration for the first winding 31A, the first conductive pad 311A, the second conductive pad 312A, the first through hole 331A, the second through hole 332A and the through hole 300A from a top view of the first surface 301A of the insulating baseboard thereof. Each of the coil modules 3c, 3d, 3e further includes the second winding 32c, 32d, 32e, the third conductive pad 321c, 321d, 321e, the fourth conductive pad 322c, 322d, 322e, the third through hole 333c, 333d, 333e, and the fourth through hole 334c, 334d, 334e on the second surface 302c, 302d, 302e of the insulating baseboard thereof. For the *i*^{th} and *i*+1^{th} ones of the coil modules 3 (note: the coil modules 3 herein are numbered from top to bottom in order) where *i* represents any positive integer smaller than or equal to a total number of the coil modules 3 minus one, the fourth conductive pad of the *i*^{th} one of the coil modules 3 corresponds to the third conductive pad of the *i* + 1^{th} one of the coil modules 3 in position, and the fourth through hole of the *i*^{th} one of the coil modules 3 corresponds to the third through hole of the *i* + 1^{th} one of the coil modules 3 in position. Correspondingly, as exemplified in Figure 19, the capacitive reactance voltage transformer further includes, for the *i*^{th} and *i* + 1^{th} ones of the coil modules 3, the insulating plate 4A interposed between the *i*^{th} and *i* + 1^{th} ones of the coil modules 3 and formed with at least a first plate through hole 41A corresponding to the first through holes 331A of the *i*^{th} and *i* + 1^{th} ones of the coil modules 3 in position, a second plate through hole 41B corresponding to the second through holes 332A of the *i*^{th} and *i* + 1^{th} ones of the coil modules 3 in position, and a third plate through hole 41C corresponding to the fourth through hole of the *i*^{th} one of the coil modules 3 and the third through hole of the *i*+1^{th} one of the coil modules 3 in position.

In such a case, the capacitive reactance voltage transformer includes the first conducting component, the second conducting component, and, for the *i*^{th} and *i*+1^{th} ones of the coil modules 3, a corresponding conducting component. The first conducting component is electrically connected to the first conductive pads 311A of the coil modules 3 by extension through the first through holes 331A of the coil modules 3 and the first plate through hole of each of the insulating plates that is aligned with the first through holes 331A in the reference direction. The second conducting component is electrically connected to the second conductive pads 312A of the coil modules 3 by extension through the second through holes 332A of the coil modules 3 and the second plate through hole of each of the insulating plates that is aligned with the second through holes 332A in the reference direction. For the *i*^{th} and *i* + 1^{th} ones of the coil modules 3, the corresponding conducting component is electrically connected to the fourth conductive pad of the *i*^{th} one of the coil modules 3 and the third conductive pad of the *i*+1^{th} one of the coil modules 3 by extension through the fourth through hole of the *i*^{th} one of the coil modules 3, the third through hole of the *i*+1^{th} one of the coil modules 3, and the third plate through hole of the insulating plate that is interposed between the *i*^{th} and *i*+1^{th} ones of the coil modules 3 and that is aligned with the fourth through hole of the *i*^{th} one of the coil modules 3 and the third through hole of the *i*+1^{th} one of the coil modules 3 in the reference direction.

As exemplified in Figure 18, for the coil modules 3c, 3d, the fourth conductive pad 322c of the coil module 3c corresponds to the third conductive pad 321d of the coil module 3d in position, and the fourth through hole 334c of the coil module 3c corresponds to the third through hole 333d of the coil module 3d in position; and, for the coil modules 3d, 3e, the fourth conductive pad 322d of the coil module 3d corresponds to the third conductive pad 321e of the coil module 3e in position, and the fourth through hole 334d of the coil module 3d corresponds to the third through hole 333e of the coil module 3e in position. In this exemplary implementation, each of the coil modules 3c, 3d, 3e is further formed with two additional through holes, such as through holes 335c, 336c for the coil module 3c, through holes 335d, 336d for the coil module 3d, and through holes 335e, 336e for the coil module 3e. Further referring to Figure 19, the capacitive reactance voltage transformer may include two insulating plates 4A that are respectively interposed between the coil modules 3c, 3d and between the coil modules 3d, 3e and that have the same configuration, i.e., formed with six plate through holes 41A, 41B, 41C (for 3c, 3d), 41C (for 3d, 3e), 41D, 41E respectively corresponding to the six through holes of each of the coil modules 3c, 3d, 3e, but this disclosure is not limited in this respect. The capacitive reactance voltage transformer may include first to sixth conducting components (not shown) that respectively extend through the six through holes of each of the coil modules 3c, 3d, 3e and the insulating plates 4A. The first conducting component extends through the through holes 331A of the coil modules 3c, 3d, 3e and the through holes 41A of the insulating plates 4A so as to electrically connect the first conductive pads 311A of the coil modules 3c, 3d, 3e together. The second conducting component extends through the through holes 332A of the coil modules 3c, 3d, 3e and the through holes 41B of the insulating plates 4A so as to electrically connect the second conductive pads 312A of the coil modules 3c, 3d, 3e together. The third conducting component extends through the through holes 333c, 335d, 335e respectively of the coil modules 3c, 3d, 3e and the through holes 41D of the insulating plates 4A, and thus is electrically connected to the third conductive pad 321c of the coil module 3c. The fourth conducting component extends through the through holes 334c, 333d, 336e respectively of the coil modules 3c, 3d, 3e and the through holes 41C (for 3c, 3d) of the insulating plates 4A so as to electrically connect the fourth conductive pad 322c and the third conductive pad 321d respectively of the coil modules 3c, 3d together. In other words, the fourth conducting component is the abovementioned corresponding conducting component for the coil modules 3c, 3d. The fifth conducting component extends through the through holes 335c, 334d, 333e respectively of the coil modules 3c, 3d, 3e and the through holes 41C (for 3d, 3e) of the insulating plates 4A so as to electrically connect the fourth conductive pad 322d and the third conductive pad 321e respectively of the coil modules 3d, 3e together. In other words, the fifth conducting component is the abovementioned corresponding conducting component for the coil modules 3d, 3e. The sixth conducting component extends through the through holes 336c, 336d, 334e respectively of the coil modules 3c, 3d, 3e and the through holes 41E of the insulating plates 4A, and thus is electrically connected to the fourth conductive pad 322e of the coil module 3e . Via the fourth and fifth conducting components, the second windings 32c, 32d, 32e are electrically connected in series, and the first and sixth conducting components may respectively serve as two terminals of the series-connected second windings 32c, 32d, 32e for connection to other circuit(s).

Under the relationship previously described, it can be known that implementation of the number of the through holes for the coil modules 3 may be determined based on the total number of the coil modules 3.

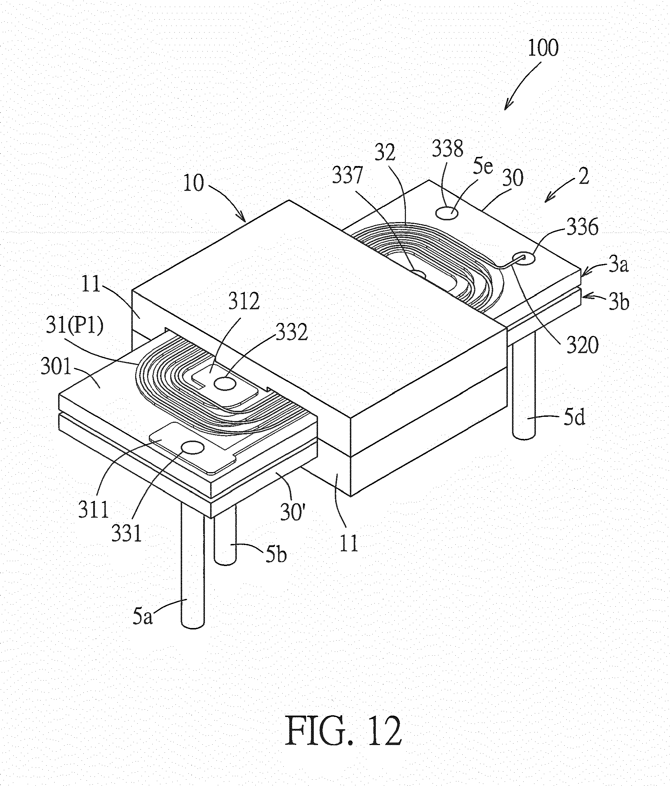

Referring to Figures 12 to 15, an example of a capacitive reactance voltage transformer 100 not part of the invention as claimed is illustrated. This example of a capacitive reactance voltage transformer 100 is a variant of the embodiment shown in Figure 1. This example is different from the embodiment in what are described in the following.

The insulating plate 4 in the embodiment of the capacitive reactance voltage transformer 100 as shown in Figure 1 is omitted from the example. The insulating baseboard 30 (30') of each of the coil modules 3a and 3b is implemented to be a printed circuit board.

For each of the coil modules 3a and 3b, the insulating baseboard 30 (30') has an installation surface. In this embodiment, the first surface 301 (301') of the insulating baseboard 30 (30') serves as the installation surface.

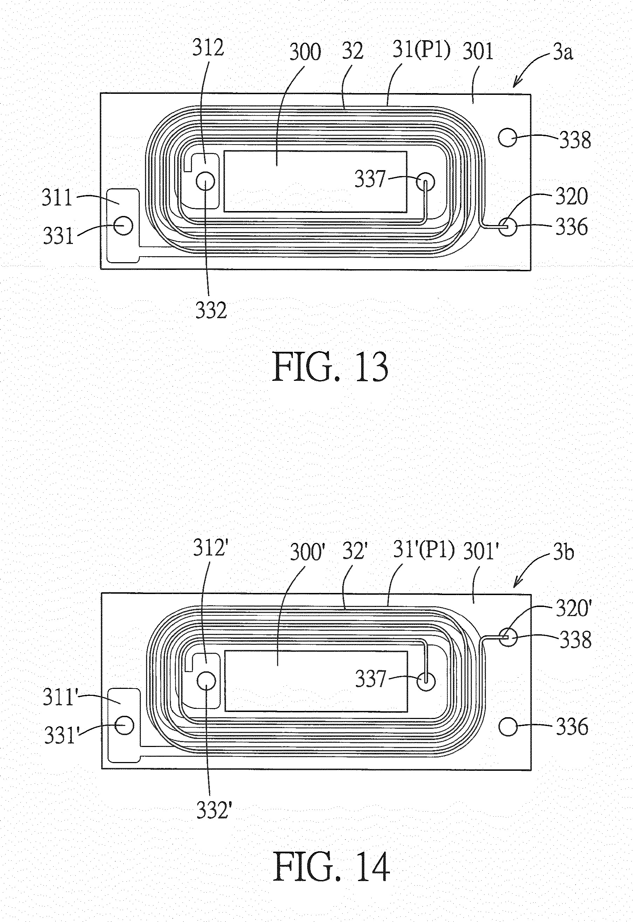

In this example not part of the invention as claimed, each of the first windings 31 and 31' respectively of the coil modules 3a and 3b is formed on the installation surface of the corresponding insulating baseboard 30 (30') and spirals around the through hole 300 (300') of the insulating baseboard 30 (30') to form the conducting pattern (P1) as shown in Figures 13 and 14. Similar to the embodiment as shown in Figures 5 and 7, the coil module 3a (3b) further includes the first conductive pad 311 (311') and the second conductive pad 312 (312') that are respectively connected to opposite ends of the first winding 31 (31') and that are expanded in size from the corresponding ends of the first winding 31 (31'), as shown in Figure 13 and 14, so as to form a larger area in comparison to the first winding 31 (31').

In this example not part of the invention as claimed, each of the second windings 32 and 32' respectively of the coil modules 3a and 3b is implemented by a conducting wire, which is coated with an external insulating layer, and is attached to the conducting pattern (P1) by insulation adhesive and is arranged in such a way as to substantially correspond to the conducting pattern (P1) . In this example, the external insulating layer coated on the second winding 32 (32') has a three-insulating-layer structure (not shown) and cooperates with the second winding 32 (32') to form a three-layer insulated wire that is capable of withstanding high voltage. In this way, the second winding 32 (32') is spaced apart from the first winding 31 (31') by a distance equaling a thickness of the external insulating layer. It should be noted that the second windings 32 and 32' respectively of the coil modules 3a and 3b are connected as one piece, e.g. , as a single piece of a three-layer insulated wire.

In addition, each of the coil modules 3a and 3b is formed with the first through hole 331 (331') extending through the first conductive pad 311 (311') and the insulating baseboard 30 (30'), the second through hole 332 (332') extending through the second conductive pad 312 (312') and the insulating baseboard 30 (30'), and three base through holes 336 (336'), 337 (337') and 338 (338') which extend through merely the insulating baseboard 30 (30') and which correspond respectively to the third to fifth through holes 333 to 335 (or 333' to 335') in the first embodiment (see Figures 5 to 8) . For each of the coil modules 3a, 3b, two of the base through holes 336, 337 and 338 (336', 337' and 338') allow passage of the second windings 32, 32' that are connected as one piece.

Referring further to Figure 12, the first conductive pole (5a) is electrically connected to the first conductive pads 311 and 311' respectively of the coil modules 3a and 3b by extension through the first through holes 331 and 331' respectively of the coil modules 3a and 3b. The second conductive pole (5b) is electrically connected to the second conductive pads 312 and 312' respectively of the coil modules 3a and 3b by extension through the second through holes 332 and 332' respectively of the coil modules 3a and 3b. In this way, the first windings 31 and 31' respectively of the coil modules 3a and 3b are connected in parallel to cooperatively serve as one of a primary winding and a secondary winding of the capacitive reactance voltage transformer 100. The second winding 32 (32') extends through two of the three base through holes 336, 337 and 338 (336', 337' and 338') of the corresponding insulating baseboard 30 (30') (e.g., the base through holes 336 and 337 for the coil module 3a, and the base through holes 337 and 338 for the coil module 3b) . Moreover, for the purpose of facilitating assembly of the capacitive reactance voltage transformer 100, a conductive pole (5d) that extends through the base through holes 336 (336') of the coil modules 3a, 3b may be used to make electrical connection to a free terminal 320 of the second winding 32 of the coil module 3a as shown in Figure 13, and a conductive pole (5e) that extends through the base through holes 338, 338' of the coil modules 3a, 3b may be used to make electrical connection to a free terminal 320' of the second winding 32' of the coil module 3b as shown in Figure 14.

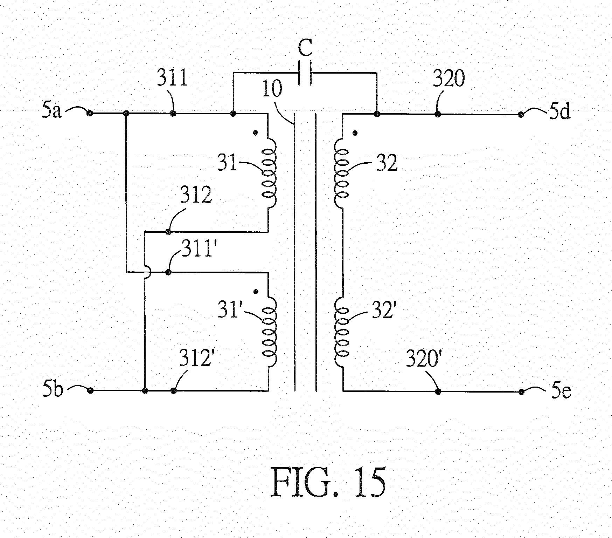

In this example not part of the invention as claimed, the first windings 31 and 31' that are connected in parallel cooperatively serve as the primary winding, and the second windings 32 and 32' that are connected in series cooperatively serve as the secondary winding of the capacitive reactance voltage transformer 100. In this way, the capacitive reactance voltage transformer 100 serves as a voltage converter with voltage gain greater than one. Figure 15 illustrates an equivalent circuit diagram of the example of a capacitive reactance voltage transformer 100. An effective coupling capacitor (C) electrically connected between terminals of the primary winding and the secondary winding results from the coupling capacitor formed between the first winding 31 and the second winding 32 of the coil module 3a, and the coupling capacitor formed between the first winding 31' and the second winding 32' of the coil module 3b.

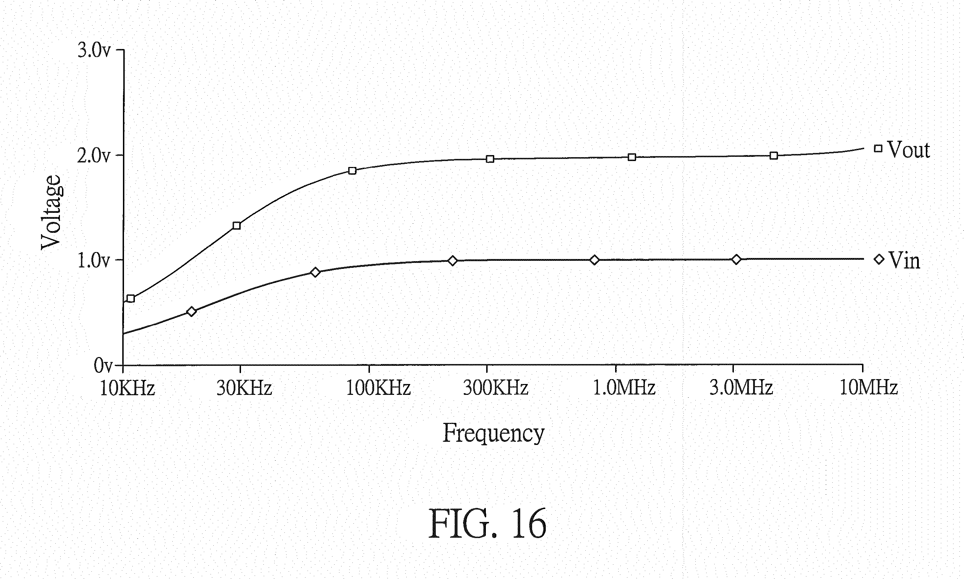

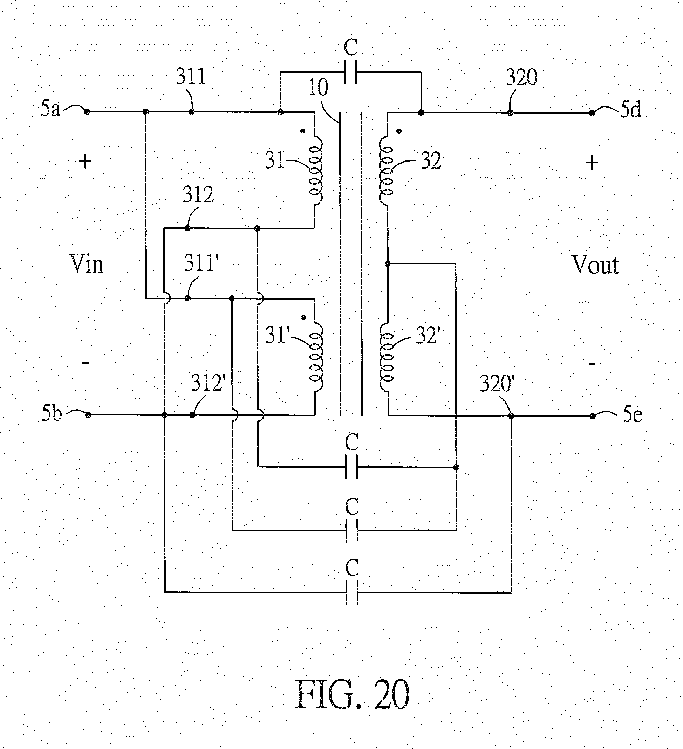

Referring to Figure 16, a computer simulation of voltage-to-frequency characteristic of the capacitive reactance voltage transformer 100 based on the equivalent circuit shown in Figure 20 is illustrated. Figure 20 illustrates a sophisticated circuit model of the capacitive reactance voltage transformer 100 utilized in the computer simulation. As shown in Figure 16, in a frequency range of operation between 10 KHz and 10 MHz, an input voltage (Vin) applied across the first and second conductive poles (5a and 5b) of the capacitive reactance voltage transformer 100 is amplified by two to appear as an output voltage (Vout) across the fourth and fifth conductive poles (5d and 5e) of the capacitive reactance voltage transformer 100 .

In summary, the capacitive reactance voltage transformer is implemented to be formed with an effective coupling capacitance (C) between terminals of the primary winding and the secondary winding thereof. In this way, when a high frequency alternating current (AC) voltage is applied to the primary winding, the AC voltage tends to be coupled to the secondary winding via the effective coupling capacitor (C) . On the other hand, when a low frequency AC voltage is applied to the primary winding, the AC voltage would be transferred to the secondary winding by electromagnetic induction. That is to say, only a portion of input electrical energy that corresponds to a lower frequency part of the input voltage is transferred from the primary winding to the secondary winding by electromagnetic induction. As a result, the capacitive reactance voltage transformer implemented to have a relatively smaller magnetic core may be able to carry high power. In addition, since the primary winding and the secondary winding both surround the leg portion of the magnetic core and are very close to each other, the effect of leakage inductance can be alleviated, reducing waste of energy and improving energy conversion efficiency.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the invention, as defined by the appended claims.

## Claims

1. A capacitive reactance voltage transformer (100) including:
a magnetic core (1) that is formed with an internal space (12), and that has a leg portion (13) for passage of at least one closed magnetic loop path; and
a coil unit (2) sleeved on said leg portion (13) of said magnetic core (1), and including a plurality of coil modules (3) which are sleeved on said leg portion (13) of said magnetic core (1) and stacked together, and each of which includes
an insulating baseboard (30) that is formed with a through hole (300) through which said leg portion (13) of said magnetic core (1) extends, and
a first winding (31) and a second winding (32) that are disposed on said insulating baseboard (30) and spaced apart from each other, said first winding (31) surrounding said leg portion (13) of said magnetic core (1) in such a way as to substantially correspond to said second winding (32) so as to cooperatively form a coupling capacitor,
wherein said first windings (31) respectively of said coil modules (3) are connected in parallel to cooperatively serve as one of a primary winding and a secondary winding, and said second windings (32) respectively of said coil modules (3) are connected in series to cooperatively serve as the other one of the primary winding and the secondary winding,
the capacitive reactance voltage transformer (100) **characterised in that** said coil unit (2) further includes, for each pair of said coil modules (3) that are stacked adjacent to each other, an insulating plate (4) that is sleeved on said leg portion (13) of said magnetic core (1) and that is interposed between said coil modules; and
for each of said coil modules (3), said insulating baseboard (30) has a first surface (301) and a second surface (302) opposite to each other, said first winding (31) and said second winding (32) surrounding said through hole (300) of said insulating baseboard (30) respectively on said first surface (301) and said second surface (302) of said insulating baseboard (30) in such a way as to substantially correspond to each other,
each of said coil modules (3) further includes a first conductive pad (311) and a second conductive pad (312) that are respectively connected to opposite ends of said first winding (31), and a third conductive pad (321) and a fourth conductive pad (322) that are respectively connected to opposite ends of said second winding (32), said first to fourth conductive pads being misaligned with each other in a reference direction perpendicular to said first and second surfaces of said insulating baseboard;
for said coil modules (3), said first conductive pads correspond to each other in position in the reference direction, and said second conductive pads correspond to each other in position in the reference direction;
for i^{th} and i+1^{th} ones of said coil modules (3) where i represents any positive integer smaller than or equal to a total number of said coil modules (3) minus one, said fourth conductive pad of the i^{th} one of said coil modules (3) corresponds to said third conductive pad of the i+1^{th} one of said coil modules (3) in position in the reference direction; each of said coil modules (3) is formed with a first through hole (331) extending through said first conductive pad (311) and said insulating baseboard (30), a second through hole (332) extending through said second conductive pad (312) and said insulating baseboard (30), a third through hole (333) extending through said third conductive pad (321) and said insulating baseboard (30), and a fourth through hole (334) extending through said fourth conductive pad (322) and said insulating baseboard (30);
for said coil modules (3), said first through holes (331) correspond to each other in position in the reference direction, and said second through holes (332) correspond to each other in position in the reference direction;
for the i^{th} and i+1^{th}ones of said coil modules (3), said fourth through hole (334) of the i^{th} one of said coil modules (3) corresponds to said third through hole (333) of the i+1^{th} one of said coil modules (3) in position in the reference direction;
for the i^{th} and i+1^{th}ones of said coil modules (3), said insulating plate (4) that is interposed between the i^{th} and i+1^{th}ones of said coil modules is further formed with a first plate through hole (41A) that corresponds to said first through holes (331) of the i^{th} and i+1^{th}ones of said coil modules (3) in position in the reference direction, a second plate through hole (41B) that corresponds to said second through holes (332) of the i^{th} and i+1^{th}ones of said coil modules (3) in position in the reference direction, and a third plate through hole (41C) that corresponds to said fourth through hole (334) of said the i^{th} one of said coil modules (3) and said third through hole (333) of the i+1^{th} one of said coil modules (3) in position in the reference direction;
said capacitive reactance voltage transformer (100) further comprises:
a first conducting component (5a) that is electrically connected to said first conductive pads (311) of said coil modules by extension through said first through holes (331) of said coil modules and said first plate through hole (41A) of said insulating plate (4) for the i^{th} and i+1^{th}ones of said coil modules (3);
a second conducting component (5b) that is electrically connected to said second conductive pads (312) of said coil modules by extension through said second through holes (332) and said second plate through hole (41B) of said insulating plate (4) for the i^{th} and i+1^{th} ones of said coil modules (3); and
for the i^{th} and i+1^{th}ones of said coil modules (3), a third conducting component (5c) that is electrically connected to said fourth conductive pad (322) of the i^{th} one of said coil modules (3) and said third conductive pad (321) of the i+1^{th} one of said coil modules (3) by extension through said fourth through hole (334) of the i^{th} one of said coil modules (3), said third through hole (333) of the i+1^{th} one of said coil modules (3), and said third plate through hole (41C) of said insulating plate (4) which is interposed between the i^{th} and i+1^{th} ones of said coil modules (3) .

2. The capacitive reactance voltage transformer (100) as claimed in claim 1, **characterized in that** said insulating plate (4) is made of a plastic material, and said insulating baseboard (30) of each of said coil modules (3) is made of a material that contains silicon dioxide.

## Patentansprüche

1. Kapazitiver Reaktanzspannungswandler (100), enthaltend:
einen Magnetkern (1), der mit einem Innenraum (12) ausgebildet ist und der einen Schenkelabschnitt (13) zum Durchtritt wenigstens eines geschlossenen Magnetkreispfades hat; und
eine Spuleneinheit (2), die am Schenkelabschnitt (13) des Magnetkerns (1) mit einer Hülse versehen ist und mehrere Spulenmodule (3) enthält, die am Schenkelabschnitt (13) des Magnetkerns (1) mit einer Hülse versehen und zusammengestapelt sind, und von denen jedes enthält:
eine isolierende Basisplatte (30), die mit einem Durchgangsloch (300) ausgebildet ist, durch das sich der Schenkelabschnitt (13) des Magnetkerns (1) erstreckt, und
eine erste Wicklung (31) und eine zweite Wicklung (32), die auf der isolierenden Basisplatte (30) angeordnet und voneinander beabstandet sind,
wobei die erste Wicklung (31) den Schenkelabschnitt (13) des Magnetkerns (1) in einer solchen Weise umgibt, dass sie im Wesentlichen der zweiten Wicklung (32) entspricht, um so zusammenwirkend einen Kopplungskondensator zu bilden,
wobei die ersten Wicklungen (31) jeweils der Spulenmodule (3) parallel geschaltet sind, um zusammenwirkend als eines von einer Primärwicklung und einer Sekundärwicklung zu dienen, und die zweiten Wicklungen (32) jeweils der Spulenmodule (3) in Reihe geschaltet sind, um zusammenwirkend als das andere der Primärwicklung und der Sekundärwicklung zu dienen,
wobei der kapazitive Reaktanzspannungswandler (100) **dadurch gekennzeichnet ist, dass** die Spuleneinheit (2) ferner für jedes Paar der Spulenmodule (3), die nebeneinander gestapelt sind, eine Isolierplatte (4) enthält, die am Schenkelabschnitt (13) des Magnetkerns (1) mit einer Hülse versehen ist und zwischen den Spulenmodulen angeordnet ist; und
für jedes der Spulenmodule (3) die isolierende Basisplatte (30) eine erste Oberfläche (301) und eine zweite Oberfläche (302) entgegengesetzt zu einander hat,
wobei die erste Wicklung (31) und die zweite Wicklung (32) das Durchgangsloch (300) der isolierenden Basisplatte (30) jeweils auf der ersten Oberfläche (301) und der zweiten Oberfläche (302) der isolierenden Basisplatte (30) in einer solchen Weise umgeben, dass sie im Wesentlichen einander entsprechen,
jedes der Spulenmodule (3) ferner ein erstes leitfähiges Feld (311) und ein zweites leitfähiges Feld (312), die entsprechend mit entgegengesetzten Enden der ersten Wicklung (31) verbunden sind, und ein drittes leitfähiges Feld (321) und ein viertes leitfähiges Feld (322), die entsprechend mit entgegengesetzten Enden der zweiten Wicklung (31) verbunden sind, enthält, wobei die ersten bis vierten leitfähigen Felder in einer Bezugsrichtung senkrecht zu den ersten und zweiten Oberflächen der isolierenden Basisplatte zueinander verstellt sind;
für die Spulenmodule (3) die ersten leitfähigen Felder in der Bezugsrichtung einander positionell entsprechen und die zweiten leitfähigen Felder in der Bezugsrichtung einander positionell entsprechen;
für i-te und i+1-te der Spulenmodule (3) wobei i eine positive ganze Zahl darstellt, die kleiner oder gleich einer Gesamtzahl der Spulenmodule ist (3) minus Eins ist, das vierte leitfähige Feld des i-ten der Spulenmodule (3) dem dritten leitfähigen Feld des i+1-ten der Spulenmodule (3) in der Bezugsrichtung positionell entspricht; jedes der Spulenmodule (3) mit einem ersten Durchgangsloch (331), das sich durch das erste leitfähige Feld (311) und die isolierende Basisplatte (30) erstreckt, einem zweiten Durchgangsloch (332), das sich durch das zweite leitfähige Feld (312) und die isolierende Basisplatte (30) erstreckt, einem dritten Durchgangsloch (333), das sich durch das dritte leitfähige Feld (321) und die isolierende Basisplatte (30) erstreckt, und einem vierten Durchgangsloch (334), das sich durch das vierte leitfähige Feld (322) und die isolierende Basisplatte (30) erstreckt, ausgebildet ist; für die Spulenmodule (3) die ersten Durchgangslöcher (331) in der Bezugsrichtung einander positionell entsprechen und die zweiten Durchgangslöcher (332) in der Bezugsrichtung einander positionell entsprechen;
für die i-ten und i+1-ten der Spulenmodule (3) das vierte Durchgangsloch (334) des i-ten der Spulenmodule (3) dem dritten Durchgangsloch (333) des i+1-ten der Spulenmodule (3) in der Bezugsrichtung positionell entspricht;
für die i-ten und i+1-ten der Spulenmodule (3) die Isolierplatte (4), die zwischen den i-ten und i+1-ten der Spulenmodule angeordnet ist, ferner mit einem ersten Plattendurchgangsloch (41A), das den ersten Durchgangslöchern (331) der i-ten und i+1-ten der Spulenmodule (3) in der Bezugsrichtung positionell entspricht, einem zweiten Plattendurchgangsloch (41B), das den zweiten Durchgangslöchern (332) der i-ten und i+1-ten der Spulenmodule (3) in der Bezugsrichtung positionell entspricht, und einem dritten Plattendurchgangsloch (41C), das dem vierten Durchgangsloch (334) des i-ten der Spulenmodule (3) und dem dritten Durchgangsloch (333) des i+1-ten der Spulenmodule (3) in der Bezugsrichtung positionell entspricht, ausgebildet ist;
der kapazitive Reaktanzspannungswandler (100) ferner aufweist:
eine erste leitende Komponente (5a), die mit den ersten leitfähigen Feldern (311) der Spulenmodule durch Erstreckung durch die ersten Durchgangslöcher (331) der Spulenmodule und das erste Plattendurchgangsloch (41A) der Isolierplatte (4) für die i-ten und i+1-ten der Spulenmodule (3) elektrisch verbunden ist;
eine zweite leitende Komponente (5b), die mit den zweiten leitfähigen Feldern (312) der Spulenmodule durch Erstreckung durch die zweiten Durchgangslöcher (332) und das zweite Plattendurchgangsloch (41B) der Isolierplatte (4) für die i-ten und i+1-ten der Spulenmodule (3) elektrisch verbunden ist; und
für die i-ten und i+1-ten der Spulenmodule (3) eine dritte leitende Komponente (5c), die mit dem vierten leitfähigen Feld (322) des i+1 der Spulenmodule (3) und dem dritten leitfähigen Feld (321) des i+1-ten der Spulenmodule (3) durch Erstreckung durch das vierte Durchgangsloch (334) des i-ten der Spulenmodule (3), das dritte Durchgangsloch (333) des i+1-ten der Spulenmodule (3) und das dritte Plattendurchgangsloch (41C) der Isolierplatte (4), die zwischen den i-ten und i+1-ten der Spulenmodule (3) angeordnet ist, elektrisch verbunden ist.

2. Kapazitiver Reaktanzspannungswandler (100) nach Anspruch 1, **dadurch gekennzeichnet, dass** die Isolierplatte (4) aus einem Kunststoffmaterial gemacht ist und die isolierende Basisplatte (30) jedes der Spulenmodule (3) aus einem Material gemacht ist, das Siliziumdioxid enthält.

## Revendications

1. Transformateur de tension à réactance capacitive (100) incluant :
un noyau magnétique (1) qui est formé d'un espace interne (12) et qui a une partie de branche (13) pour le passage d'au moins un trajet en boucle magnétique fermée ; et
une unité de bobine (2) qui est emmanchée sur ladite partie de branche (13) dudit noyau magnétique (1) et qui inclut une pluralité de modules de bobine (3) qui sont emmanchés sur ladite partie de branche (13) dudit noyau magnétique (1) et empilés ensemble, et dont chacun inclut :
une plaque de base isolante (30) qui est formée d'un trou traversant (300) à travers lequel s'étend ladite partie de branche (13) dudit noyau magnétique (1), et
un premier enroulement (31) et un deuxième enroulement (32) qui sont disposés sur ladite plaque de base isolante (30) et espacés l'un de l'autre, ledit premier enroulement (31) entourant ladite partie de branche (13) dudit noyau magnétique (1) de manière à correspondre sensiblement audit deuxième enroulement (32) quant à former conjointement un condensateur de couplage,
dans lequel lesdits premiers enroulements (31) respectivement desdits modules de bobine (3) sont connectés en parallèle pour servir conjointement en tant qu'un enroulement parmi un enroulement primaire et un enroulement secondaire, et dans lequel lesdits deuxièmes enroulements (32) respectivement desdits modules de bobine (3) sont connectés en série pour servir conjointement en tant que l'autre enroulement parmi l'enroulement primaire et l'enroulement secondaire,
le transformateur de tension à réactance capacitive (100) étant **caractérisé en ce que** ladite unité de bobine (2) inclut en outre, pour chaque paire desdits modules de bobine (3) qui sont empilés l'un à côté de l'autre, une plaque isolante (4) qui est emmanchée sur ladite partie de branche (13) dudit noyau magnétique (1) et qui est interposée entre lesdits modules de bobine ; et
pour chacun desdits modules de bobine (3), ladite plaque de base isolante (30) a une première surface (301) et une deuxième surface (302) qui sont opposées l'une à l'autre, ledit premier enroulement (31) et ledit deuxième enroulement (32) entourant ledit trou traversant (300) de ladite plaque de base isolante (30) respectivement sur ladite première surface (301) et ladite deuxième surface (302) de ladite plaque de base isolante (30), de manière à se correspondre sensiblement,
chacun desdits modules de bobine (3) inclut en outre un premier plot conducteur (311) et un deuxième plot conducteur (312) qui sont connectés respectivement aux extrémités opposées dudit premier enroulement (31), et un troisième plot conducteur (321) et un quatrième plot conducteur (322) qui sont connectés respectivement aux extrémités opposées dudit deuxième enroulement (32), lesdits premier jusqu'au quatrième plots conducteurs étant désalignés entre eux dans une direction de référence perpendiculaire auxdites première et deuxième surfaces de ladite plaque de base isolante ;
pour lesdits modules de bobine (3), lesdits premiers plots conducteurs se correspondent dans une position dans la direction de référence, et lesdits deuxième plots conducteurs se correspondent dans une position dans la direction de référence ;
pour les i-ième et i+1-ième desdits modules de bobine (3) où i représente tout entier positif inférieur ou égal à un nombre total desdits modules de bobine (3) moins un, ledit quatrième plot conducteur du i-ième desdits modules de bobine (3) correspond audit troisième plot conducteur du i+1-ième desdits modules de bobine (3) dans une position dans la direction de référence ; chacun desdits modules de bobine (3) est formé d'un premier trou traversant (331) qui s'étend à travers ledit premier plot conducteur (311) et ladite plaque de base isolante (30), d'un deuxième trou traversant (332) qui s'étend à travers ledit deuxième plot conducteur (312) et ladite plaque de base isolante (30), d'un troisième trou traversant (333) qui s'étend à travers ledit troisième plot conducteur (321) et ladite plaque de base isolante (30), et d'un quatrième trou traversant (334) qui s'étend à travers ledit quatrième plot conducteur (322) et ladite plaque de base isolante (30) ;
pour lesdits modules de bobine (3), lesdits premiers trous traversants (331) se correspondent dans une position dans la direction de référence, et lesdits deuxièmes trous traversants (332) se correspondent dans une position dans la direction de référence ;
pour les i-ième et i+1-ième desdits modules de bobine (3), ledit quatrième trou traversant (334) du i-ième desdits modules de bobine (3) correspond audit troisième trou traversant (333) du i+1-ième desdits modules de bobine (3) dans une position dans la direction de référence ;
pour les i-ième et i+1-ième desdits modules de bobine (3), ladite plaque isolante (4) qui est interposée entre les i-ième et i+1-ième desdits modules de bobine est en outre formée d'un premier trou traversant de plaque (41A) qui correspond auxdits premiers trous traversants (331) des i-ième et i+1-ième desdits modules de bobine (3) dans une position dans la direction de référence, d'un deuxième trou traversant de plaque (41B) qui correspond auxdits deuxièmes trous traversants (332) des i-ième et i+1-ième desdits modules de bobine (3) dans une position dans la direction de référence, et d'un troisième trou traversant de plaque (41C) qui correspond audit quatrième trou traversant (334) dudit i-ième desdits modules de bobine (3) et dudit troisième trou traversant (333) du i+1-ième desdits modules de bobine (3) dans une position dans la direction de référence ;
ledit transformateur de tension à réactance capacitive (100) comprend en outre :
un premier composant conducteur (5a) qui est connecté électriquement auxdits premiers plots conducteurs (311) desdits modules de bobine par extension à travers lesdits premiers trous traversants (331) desdits modules de bobine et ledit premier trou traversant de plaque (41A) de ladite plaque isolante (4) pour les i-ième et i+1-ième desdits modules de bobine (3) ;
un deuxième composant conducteur (5b) qui est connecté électriquement auxdits deuxièmes plots conducteurs (312) desdits modules de bobine par extension à travers lesdits deuxièmes trous traversants (332) et ledit deuxième trou traversant de plaque (41B) de ladite plaque isolante (4) pour les i-ième et i+1-ième desdits modules de bobine (3) ; et
pour les i-ième et i+1-ième desdits modules de bobine (3), un troisième composant conducteur (5c) qui est connecté électriquement audit quatrième plot conducteur (322) du i-ième desdits modules de bobine (3) et audit troisième plot conducteur (321) du i+1-ième desdits modules de bobine (3) par extension à travers ledit quatrième trou traversant (334) du i-ième desdits modules de bobine (3), ledit troisième trou traversant (333) du i+1-ième desdits modules de bobine (3), et ledit troisième trou traversant de plaque (41C) de ladite plaque isolante (4) qui est interposée entre les i-ième et i+1-ième desdits modules de bobine (3).

2. Transformateur de tension à réactance capacitive (100) selon la revendication 1, **caractérisé en ce que** ladite plaque isolante (4) est constituée de matière plastique et ladite plaque de base isolante (30) de chacun desdits modules de bobine (3) est constituée d'un matériau contenant du dioxyde de silicium.
